# EUROPEAN PATENT APPLICATION

(11) **EP 4 575 880 A1**
(43) Date of publication of application: **25.06.2025**
(21) Application number: 24216421.8
(22) Date of filing: 29.11.2024
(51) Int. Cl.: G06F 40/106, G06F 40/16, G06F 40/169, G06F 40/216, G06F 40/30, G06F 40/44, G06F 40/56

(54) **METHOD AND SYSTEM TO GENERATE PERSONA-BASED COMMENTARY DATA FOR MACHINE LEARNING MODEL CARD DOCUMENT**

(30) Priority: 18.12.2023 IN 202321086605
(71) Applicant: Tata Consultancy Services Limited, Maharashtra (IN)
(72) Inventor: JAIN, ANUBHAV, 110001 New Delhi (IN); WALAVE, PRAVIN DINKAR, 411057 Pune (IN); KALELE, AMIT, 411057 Pune (IN); SUBBIAH, RAVINDRAN, 695581 Trivandrum (IN)
(74) Representative: Goddar, Heinz J.

(57) **Abstract**

This disclosure relates generally to method and system to generate persona-based commentary data for machine learning model card document. Existing techniques on model card are designed mainly for personas and understanding section of the model card document requires a certain level of expertise in machine learning. The method of the present disclosure receives a model card document comprising a plurality of sections and the model card document corresponds to a persona. Each section of the model card document obtains a metadata for the persona. The data curator machine learning model automatically generates a persona-based report trajectory for a plurality of sections of the metadata and a plurality of schema rules to generate a prompt template. The commentary generator ML model generates one or more commentary data for each section associated with the prompt template corresponding to the persona.

## Description

### CROSS-REFERENCE TO RELATED APPLICATIONS AND PRIORITY

The present application claims priority to Indian application no. 202321086605, filed on December 18, 2023.

### TECHNICAL FIELD

The disclosure herein generally relates to machine learning model card document, and, more particularly, to method and system to generate persona-based commentary data for machine learning model card document.

### BACKGROUND

With the explosion in popularity of generative AI in general, prompting has become an increasingly important skill for those in the world of Al. Grafting a prompt, the mechanism of interacting with a large language model (LLM) , is not the simple syntactic task to generate desired output. It became clear that practice and consideration would be needed for prompt mastery. As a result, developing processes to create most useful prompts possible known as prompt engineering has become a coveted expertise in LLM domain. Prompt engineering is a most crucial aspect of utilizing LLMs effectively and is a powerful tool for customizing the interactions with any generative AI enabled tool. Prompt engineering involves crafting clear and specific instructions or queries to elicit the desired responses from the language model. By carefully constructing prompts, users can guide large language models (LLM) output toward their intended goals and ensure more accurate and useful responses.

Conventionally, machine learning training requires large amount of training data and there is a need for manual intervention to annotate data. Once the data has been collected, many machine learning models require human intervention for data labeling. Also, existing techniques face difficulty in predicting futuristic data automatically without manual intervention and model performance. Also, even after completing the training, data scientists and machine learning models lack in predicting the need of additional data to improve LLM model accuracy to predict correct consecutive label. Prompt engineering also requires user feedback and prompt iteration.

However, the advantage of prompt engineering requires small evaluation dataset, which greatly reduces the need for human intervention. Existing machine learning techniques designed model cards mainly focus on specific audiences or personas such as data scientist and the like and understanding them might require certain level of expertise in machine learning and data science, making them less accessible to non-experts or different personas. Representing complex high-dimensional and unstructured data in understandable format within the model card is difficult, especially when it is to be designed for non-expert personas.

### SUMMARY

Embodiments of the present disclosure present technological improvements as solutions to one or more of the above-mentioned technical problems recognized by the inventors in conventional systems. For example, in one embodiment, a system to generate persona based commentary data for machine learning model card document is provided. The system includes receiving a model card document comprising a plurality of sections and the model card document corresponds to a persona. Each section of the model card document obtains a metadata from a metadata store for the persona, wherein the metadata store comprises at least one of (i) a structured metadata and (ii) an unstructured metadata. The metadata preprocesses obtain relevant information of the plurality of sections of the model card document. The preprocessed metadata are fed into a data curator machine learning model to obtain information associated with a plurality of sections corresponding to the persona, wherein the persona represents a type of person with role specific domain communication characteristics. Further, a data curator ML model generates a persona-based report trajectory for each section, based on the metadata of corresponding section and a plurality of schema rules, wherein a prompt template is generated for the persona-based report trajectory. Further, a commentary generator ML model generates one or more commentary data for each section associated with the prompt template corresponding to the persona.

In another aspect, a method to generate persona based commentary data for machine learning model card document is provided. The method includes receiving a model card document comprising a plurality of sections and the model card document corresponds to a persona. Each section of the model card document obtains a metadata from a metadata store for the persona, wherein the metadata store comprises at least one of (i) a structured metadata and (ii) an unstructured metadata. The metadata preprocesses obtain relevant information of the plurality of sections of the model card document. The preprocessed metadata are fed into a data curator machine learning model to obtain information associated with a plurality of sections corresponding to the persona, wherein the persona represents a type of person with role specific domain communication characteristics. Further, a data curator ML model generates a persona-based report trajectory for each section, based on the metadata of corresponding section and a plurality of schema rules, wherein a prompt template is generated for the persona-based report trajectory. Further, a commentary generator ML model generates one or more commentary data for each section associated with the prompt template corresponding to the persona.

In yet another aspect, a non-transitory computer readable medium provides one or more non-transitory machine-readable information storage mediums comprising one or more instructions, which when executed by one or more hardware processors perform actions includes an I/O interface and a memory coupled to the processor is capable of executing programmed instructions stored in the processor in the memory to receive a model card document comprising a plurality of sections and the model card document corresponds to a persona. Each section of the model card document obtains a metadata from a metadata store for the persona, wherein the metadata store comprises at least one of (i) a structured metadata and (ii) an unstructured metadata. The metadata preprocesses obtain relevant information of the plurality of sections of the model card document. The preprocessed metadata are fed into a data curator machine learning model to obtain information associated with a plurality of sections corresponding to the persona, wherein the persona represents a type of person with role specific domain communication characteristics. Further, a data curator ML model generates a persona-based report trajectory for each section, based on the metadata of corresponding section and a plurality of schema rules, wherein a prompt template is generated for the persona-based report trajectory. Further, a commentary generator ML model generates one or more commentary data for each section associated with the prompt template corresponding to the persona.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 is an illustrative system (alternatively referred as persona-based commentary data generation system), in accordance with some embodiments of the present disclosure.
FIG.2 illustrates a computing system for persona-based commentary data using the system of FIG.1, in accordance with an embodiment of the present disclosure.
FIG.3 is a flow diagram of an example process for generating persona-based commentary data using the system of FIG. 1, in accordance with an embodiment of the present disclosure.
FIG.4 depicts a flow diagram for model card document generation using the system of FIG. 1, in accordance with some embodiments of the present disclosure.
FIG.5 depicts a flow diagram for persona-based specific model card document generation using the system of FIG.1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

### GLOSSARY:

As used herein, the term "model card document" refers to a document that provides information about the machine learning model in standard format and sections that may change corresponding to different persona. This model card document intends to make machine learning model transparent to persona.

"Prompt engineering" refers to process of writing instructions to prompt along with context and examples that can be understood and inferred to LLM to perform specific generation task.

"Prompt template" refers to set of instructions to the LLM that can be selectively used with corresponding context or data to infer LLM.

"Schema rules" refers to set of rules designed in accordance with needs of each persona.

"Metadata" refers to data of machine learning model that is logged during development lifecycle of the machine learning model.

Model card is a short document that provides key information about a machine learning model. Model cards increase transparency by communicating information about trained models to broad audiences. Though AI systems are playing increasingly important roles in every industry, few people understand how these systems work.

Model card document aims to provide informative and transparent description of machine learning models to stakeholders. Model cards provide a consistent way of presenting information about machine learning models that is easy to understand, maintain, and use. Creating clear and transparent model documentation can still be challenging, even with model cards. One of the biggest challenges is ensuring that the information presented in the model card is automatically generated without manual intervention, accurate, complete, and understandable. This requires a deep understanding of the machine learning model and the data used to train in generating prompts, as well as an understanding of the intended use case for the model card. While the model card provides important information about the machine learning model, it does not contain detailed information about the data used to train the model.

Exiting machine learning model cards generation techniques exhibit following behaviors such as, 1. Unable to process and transform meaningful complex, high-dimensional and unstructured metadata records for model cards, 2. Challenge in creating generalized reports that does not fit to the expertise level of all personas, and 3. Data source used to generate model cards are not comprehensive, and also lack contextual information.

In generative AI, prompt engineering personas are assigned for the LLM and the intended audience. For example, if one is interested in having LLM write an outline for a blog post on machine learning classification metrics, explicitly stating that the LLM is to act as an expert machine learning practitioner and that its intended audience is data science newcomers would certainly help provide a fruitful response. Whether this should be stated in a conversational language ("You are to act as a real estate agent with 10 years experience in the Phoenix area") or in a more formal manner ("Author: expert Phoenix real estate agent; Audience: inexperienced home buyers") can be experimented within a given scenario.

Further, a model card document must strike a balance between being easy-to-understand and communicating important technical information. When writing the model card, target audience and application domain needs consideration, for example group of people who are most likely to read the model card document. Such groups will vary according to the AI system purpose.

For example, the model card document for AI system helps medical professionals interpreting x-rays to better diagnose musculoskeletal injuries is likely to be read by medical professionals, scientists, patients, researchers, policymakers, and developers of similar AI systems. It is also important to interpret each section and generate data as required.

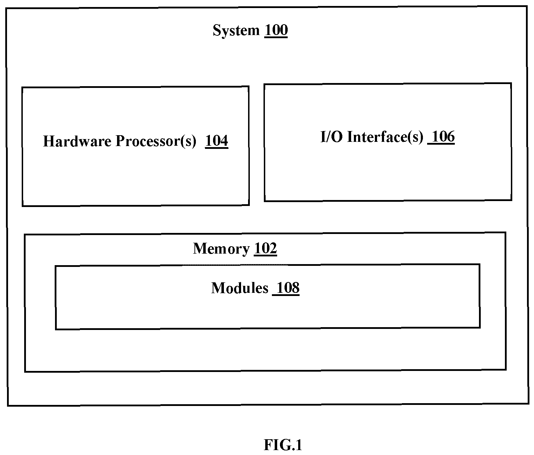

Embodiments herein provide a method and system to generate persona-based commentary data for machine learning model card document. The system may be alternatively referred as a persona-based commentary data generation system. The method of the system enables to generate persona-based machine learning model cards document format that corresponds to domain expertise. It also publishes meaningful information from complex, high-dimensional and unstructured metadata records. The method performs generation of persona-based commentary data by using a data curator ML model, and a commentary generator ML model. The method receives model card document corresponds to persona to generate one or more commentary data. The method initially preprocesses the metadata to obtain relevant information corresponding to each section of the model card document. Further, the metadata is analyzed by the data curator model. The output of the data curator model is fed as input to the commentary generator ML model to generate commentary for each section of the model card document. The disclosed system is further explained with the method as described in conjunction with FIG.1 to FIG.5 below.

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

FIG.1 is an illustrative system (alternatively referred as persona-based commentary data generation system), in accordance with some embodiments of the present disclosure. In an embodiment, the batch processing system 100 includes processor (s) 104, communication interface (s), alternatively referred as or input/output (I/O) interface(s) 106, and one or more data storage devices or memory 102 operatively coupled to the processor (s) 104. The system 100, with the processor(s) is configured to execute functions of one or more functional blocks of the system 100.

Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

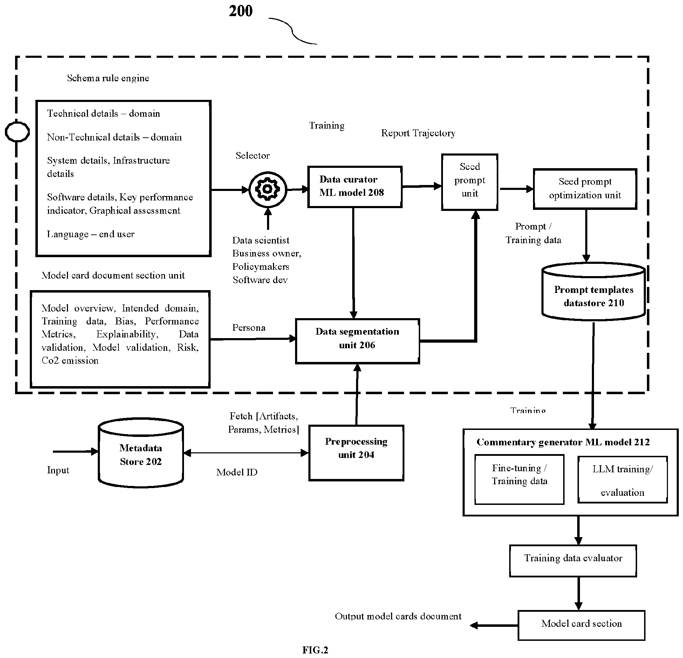

In an embodiment, the memory 102 includes a plurality of modules 108 can also include various sub-modules as depicted in FIG.2. such as a metadata store 202, a preprocessing unit 204, a data segmentation unit 206, a data curator ML model 208, a prompt templates datastore 210, and a commentary generator ML model 212. The plurality of modules 108 include programs or coded instructions that supplement applications or functions performed by the system 100 for executing different steps involved in the process of generating persona-based commentary data for model card document of the system 100. The plurality of modules 108, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 108 can be used by hardware, by computer-readable instructions executed by the one or more hardware processors 104, or by a combination thereof.

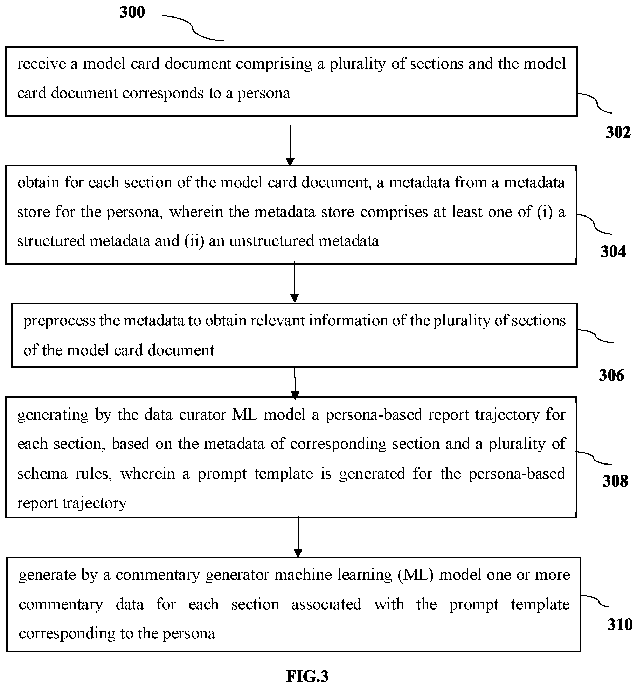

The memory 102 may comprise information pertaining to input(s)/output(s) of each step performed by the processor(s) 104 of the system 100 and methods of the present disclosure. Functions of the components of system 100, for identifying malicious agent while handling user request having at least one sensitive attribute, are explained in conjunction with FIG.2 and FIG.3 providing flow diagram, architectural overviews, and performance analysis of the system 100.

FIG.2 illustrates a computing system for model training of persona-based commentary data using the system of FIG. 1, in accordance with an embodiment of the present disclosure. The system 200 may be an example of the system 100 (FIG. 1). In an example embodiment, the system 200 may be embodied in, or is in direct communication with the system, for example the system 100 (FIG. 1). In an embodiment, the system 200 may be alternatively referred as a data privacy risk assessment system. The system 200 includes a metadata store 202, a preprocessing unit 204, a data segmentation unit 206, a data curator ML model 208, a prompt templates datastore 210, and a commentary generator ML model 212.

The metadata store 202 of the system 200 receives a model ID corresponding to a machine learning model card document and obtains metadata required to generate the model card document.

The preprocessing unit 204 of the system 200 preprocesses the metadata of the model card document to obtain information associated with one or more sections corresponding to the persona.

The data segmentation unit 206 of the system 200 segments the preprocessed metadata.

The data curator ML model 208 of the system 200 generates a persona-based report trajectory for the model card document.

The prompt templates datastore 210 of the system 200 stores the seed prompt data obtained from the data curator ML model 208.

The commentary generator ML model 212 of the system 200 generates one or more commentary data for each section associated with the prompt template corresponding to the persona.

FIG.3 is a flow diagram of an example process for generating persona-based commentary data using the system of FIG. 1, in accordance with an embodiment of the present disclosure. In an embodiment, the system 100 comprises one or more data storage devices or the memory 102 operatively coupled to the processor(s) 104 and is configured to store instructions for execution of steps of a method 300 by the processor(s) or one or more hardware processors 104. The steps of the method 300 of the present disclosure will now be explained with reference to the components or blocks of the system 100 as depicted in FIG. 1 through FIG.2, and the steps of flow diagram as depicted in FIG.3 through FIG.5. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 300, at step 302 a one or more hardware processor receive a model card document comprising a plurality of sections and the model card document corresponds to a persona. In one embodiment, the model card document provides information about machine learning models to ensure transparency, fairness, and accountability. Processing of the model card document with prompt engineering and machine learning model helps auditors, scientists, business executives and users to understand various behavioral aspects and performance. Model card document contain essential information such as overview, model information, intended domain, training data, bias, metrics, explain ability, data validation, model validation, risk, Co2 emission, and the like. Selection of each section depends on the selected persona. The depth of the information written in each section and the tone is also persona specific.

Referring to an example 1 (Table 1), where the user may feed the model card document corresponds to the persona to generate relevant one or more commentary data for every section. For example, personas may include auditors, scientists, business executives, and the like.

**Table 1 - Example 1**

| |
|---|
| ```
            Key_preformance_indicator = {
                   'personas': ['bussiness owner', 'data_scientist'],
                   'data_regex': ['risks', 'bias', 'fairness', 'accuracy',
            'explainability']
             }
            language_technical =
             {
                   'personas': ['Software developer', 'data scientist'],
                   'commentry_priorities': ['accuracy', 'model', 'training',
            'inference', 'loss', 'tables', 'graphs', 'analysis']
                   'readability_level': ['science_proficient', 'fairly_difficult',
            'standard']
             }
            technical_details_domain = {
                   'personas': ['data scientist'],
                   'domains': ['business_stratergies', 'finance', 'life_science',
            'healthcare', 'banking']
                   'readability_level': ['science_proficient', 'fairly_difficult',
            'standard']
             }
``` |

Here, in the Example 1, the user feeds the model card document into the system corresponding to the persona as the "data scientist".

Referring to the steps of the method 300, at step 304 the one or more hardware processors obtain for each section, a metadata from a metadata store for the persona, wherein the metadata store comprises at least one of (i) a structured metadata and (ii) an unstructured metadata.

For the above Example 1, the metadata store 202 obtains the metadata for the model card document based on the corresponding persona. It obtains the 'N' model Id, 'P' personas, 'S' sections, and 'R' schema rules.

The structured data may include ML model summary, metrices, parameters and the like as described in Table 2.

**Table 2- Structured metadata**

| |
|---|
| ```
"metrics": {
            "training_recall_score":0.8333333333333334,
            "training_f1_score": 0.7608333656043063,
                 "training_accuracy_score": 0.8333333333333334,
                 "training_log_loss": 0.33377570981258986,
                 "training_roc_auc_score": 0.8995008680555556,
                 "training_score": 0.8333333333333334,
                 "ops.cpu.2.util": 2.5,
                 "ops.cpu.3.util": 24.3,
                 "ops.cpu.5.util": 2.3,
                 "ops.cpu.6.util": 2.3,
                 "ops.cpu.7.util": 56.8,
                 "ops.cpu.proc.25729.util": 123.2,
                 "ops.cpu.proc.25729.memory. rssMB" : 533.4140625,
                 "ops.cpu.proc.25729.memory.percent": 1.6619212051452918,
                 "ops.cpu.proc.25729.threads" : 2.0,
                 "ops.cpu.1.util": 60.4,
                 "accuracy_score_X_train": 0.8333333333333334,
                 "f1_score-2_X_test_imp": 0.0625,
                 "accuracy_train": 0.8333333333333334,
                 "f1_score_test": 0.0625,
                 "ops.cpu.util": 54.6,
``` |
| ```
                 "ops.cpu.memory": 18.9,
                 "ops.cpu.memory.availableMB": 6449.75390625,
                 "ops.cpu.proc.4509.util": 99.8,
                 "ops.cpu.proc.4509.memory.rssMB": 523.52734375,
                 "ops.cpu.proc.4509.memory.percent": 1.630353728477854,
                 "ops.cpu.proc.4509.threads" : 2.0,
                 "training_precision_score": 0.7787456445993031,
                 "f1_score _X_train": 0.020408163265306124,
                 "accuracy_score-2_X_test_imp": 0.8333333333333334,
                 "f1_score_train": 0.020408163265306124,
                 "accuracy_test": 0.8333333333333334,
                 "ops.cpu.4.util": 1.9,
                 "ops.cpu.proc.5634.util": 113.9,
                 "ops.cpu.proc.5634.memory.rssMB" : 537.75390625,
                 "ops.cpu.proc.5634.memory.percent": 1.6746576783903047,
                 "ops.cpu.proc.5634.threads" : 2.0,
                 "ops.cpu.proc.2981.util": 104.0,
                 "ops.cpu.proc.2981.memory.rssMB" : 528.69140625,
                 "ops.cpu.proc.2981.memory.percent": 6.646439638820377,
                 "ops.cpu.proc. 2981.threads": 2.0,
                 "ops.cpu.0.util": 48.8,
                 "ops.cpu.proc.3600.util": 104.2,
                 "ops.cpu.proc.3600.memory.rssMB" : 526.7109375,
                 "ops.cpu.proc.3600.memory.percent": 6.620906248757088,
                 "ops.cpu.proc.3600.threads" : 2.0,
                 "ops.cpu.proc.4230.util" : 106.7,
                 "ops.cpu.proc.4230.memory.rssMB" : 528.046875,
                 "ops.cpu.proc.4230.memory.percent": 6.63769936299102,
``` |
| ```
                 "ops.cpu.proc.4230.threads": 2.0
               }
``` |

The unstructured metadata may include text artifacts, images, graphs, and the like as described in Table 3.

**Table 3 - Unstructured metadata**

| Model: "sequential" | | |
|---|---|---|
| Layer (type) | Output Shape | Param # |
| lstm (LSTM) | (None, 6, 256) | 269312 |
| dropout (Dropout) | (None, 6, 256) | 0 |
| lstm_1 (LSTM) | (None, 6, 256) | 525312 |
| dropout_1 (Dropout) ) | (None, 6, 256) | 0 |
| lstm_2 (LSTM) | (None, 6, 256) | 525312 |
| dropout_2 (Dropout) ) | (None, 6, 256) | 0 |
| lstm_3 (LSTM) | (None, 6, 256) | 525312 |
| dropout_3 (Dropout) ) | (None, 6, 256) | 0 |
| lstm_4 (LSTM) | (None, 64) | 82176 |
| dropout_4 (Dropout) | (None, 64) | 0 |
| dense (Dense) | (None, 1) | 65 |
| Total params: 1,927,489 | | |
| Trainable params: 1,927,489 | | |
| Non-trainable params: 0 | | |

Referring to the steps of the method 300, at step 306 the one or more hardware processors preprocess the metadata to obtain relevant information for the plurality of sections of the model card document. For the above Example 1, the preprocessing unit 204 preprocesses the metadata to obtain relevant information. Here, the preprocessing of different formats of the metadata includes json, csv, txt and thereof.

Referring to the steps of the method 300, at step 308 the one or more hardware processors feed the preprocessed metadata into a data curator machine learning model to obtain information associated with a plurality of sections corresponding to the persona, wherein the persona represents a type of person with role specific domain communication characteristics.

For the above example, the preprocessing unit 204 generates relevant information required for the ML model cards generation and wherein irrelevant information is removed.

The plurality of sections of the metadata comprises data required for each section of the model card document corresponding to the persona as depicted in Table 4,

**Table 4 - The plurality of sections of Example 1**

| |
|---|
| ```
            Data:
``` |
| ```
             {'model id': 'customer churn prediction_v1',
             'model name': 'customer churn prediction',
             'model version': '1',
             'model owner': 'AIPM_Team',
             'model status': 'READY',
             'training date': '22 July 2022',
             'contact information': 'opsense@aipm.com'}
             System Information : {'python_version': '3.6.9.final.O (64 bit)',
             'cpuinfo_version': [8, 0, 0],
             'architecture': 'X86_64',
             'bits': 64,
             'brand_name': 'Intel(R) Xeon(R) CPU E5-2686 v4 @
            2.30GHz'}
             python modules used : opsense==2.4.2
                       matplotlib==3.3.4
                        sklearn==0.0
                       configparser==5.0.1
                       pandas== 1.1.5
     
``` |

Referring to the steps of the method 300, at step 310 the one or more hardware processors generate by the data curator ML a persona-based report trajectory for each section, based on the metadata of corresponding section and a plurality of schema rules, wherein a prompt template is generated for the persona-based report trajectory.

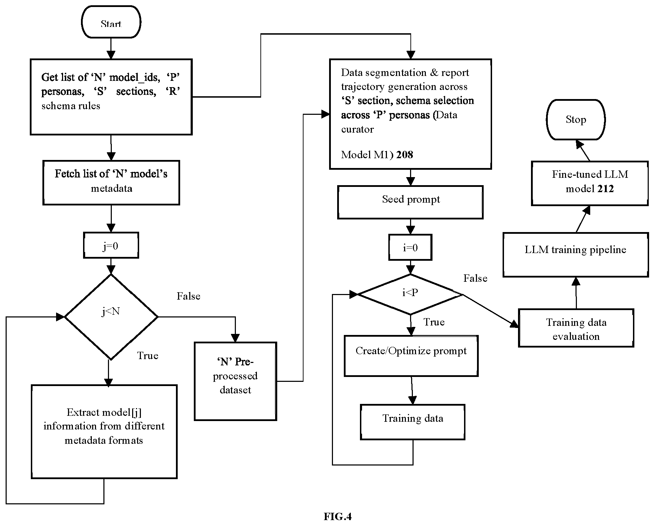

In one embodiment, the data curator ML model 208 (FIG.4) is trained to generate the persona-based report trajectory. The data curator ML model 208 obtains input from the data segmentation unit 208 and the schema rule engine. The schema rule engine is a database having predefined schema rules. The model is pretrained to select relevant schema rule based on the persona selected by the user. The data segmentation unit 208 provides the persona based specific information such as model overview, documentation, and the like. For example, the plurality of schema rules may include at least one of but not limited to Technical details - domain, Non-Technical details - domain, System details, Infrastructure details, Software details, Key performance indicator, Graphical assessment, Language - end user, Language - business executive, Language - easy, Language - technical.

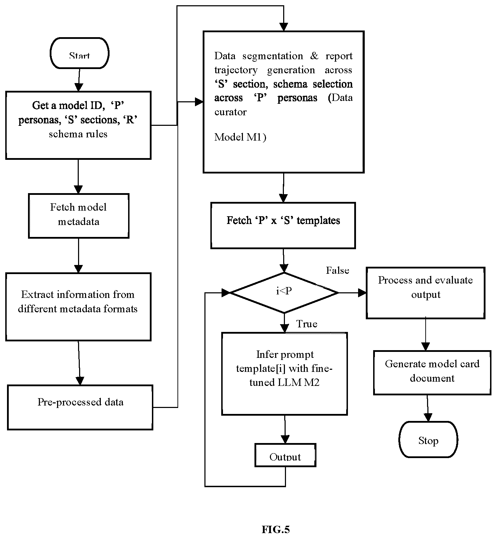

The trained data curator ML model 208 is used for inference (FIG.5). For the above Example 1, the plurality of schema rules are selected for the corresponding persona "data scientist" is fetched as depicted in Table 5. The plurality of schema rules comprises various rules for addressing content, domain, and language requirement of the persona for each section of the data curator ML model. The trained data curator ML model 208 generates at least one prompt template for the persona-based report trajectory.

The plurality of schema rules comprises rules to generate the one or more commentary data, a language content, domain, and at least one language requirement of the persona for each section. The plurality of schema rules relates to each rule comprising eligible personas, a list of data regular expressions, a readability level, and a list of domains.

**Table 5 - Schema rules selected for the Example 1**

| |
|---|
| ```
Key_preformance_indicator = {
             'personas': ['data_scientist'],
             'data_regex': ['risks', 'bias', 'fairness', 'accuracy',
            'explainability']
``` |
| ```
             }
            language_technical =
             {
             'personas': ['data scientist'],
             'commentry_priorities': ['accuracy', 'model', 'training',
            'inference', 'loss', 'tables', 'graphs', 'analysis']
             'readability_level': ['science_proficient','standard']
             }
            technical_details_domain = {
            'personas': ['data scientist'],
            'domains': ['business_stratergies', 'finance', 'life_science',
            'healthcare', 'banking']
            'readability_level': ['science_proficient', 'standard']
             }
``` |

The persona-based report trajectory comprises a plurality of trajectory parameters and its associated values as depicted in Table 6 for the Example 1,

**Table 6 - Persona-based report trajectory**

| |
|---|
| ```
Domain Identification: Business Strategies (from data curator
            ML model)
            Persona Identification: Data Scientist (user input)
            language: detailed, professional
            Interest: version, training systems, system architecture,
            CPU's/GPU's, modules, libraries, contact details, licence
            details
            Domain Specification: [{pattern: 'model risk', severity: 'very
            high'}, {pattern: 'fairness', severity: 'very high'}, {pattern:
``` |
| ```
            'co2_emission', severity: 'medium'}, {pattern: 'accuracy',
            severity: 'Very high'}, {pattern: "System information",
            severity: 'Very high'}, {pattern: "Contact information",
            severity: 'medium'}, {pattern: "library/modules used",
            Importance: 'high'}]
            Length: 1 paragraph, 1000 characters
``` |

Further, the data curator ML model generates the prompt template for data scientist persona by combining the generated report trajectory with the subsections of the pre-processed metadata as depicted in Table 7,

**Table 7 - Prompt template**

| |
|---|
| ```
Task: write report on machine learning model information
            from the given machine learning model data. Make use of the
            Report trajectory and provided data to write report.
            Report trajectory:
            Domain Identification: Business Stratergies
            Persona Identification: Data Scientist
            language: detailed, professional
            Interest: version, training systems, system architecture,
            CPU's/GPU's, modules, libraries, contact details, licence
            details
            Domain Specification: [{pattern: 'model risk', severity: 'very
            high'}, {pattern: 'fairness', severity: 'very high'}, {pattern:
            'co2_emission', severity: 'medium'}, {pattern: 'accuracy',
            severity: 'Very high'}, {pattern: "System information",
            severity: 'Very high'}, {pattern: "Contact information",
            severity: 'medium'}, {pattern: "library/modules used",
            Importance: 'high'}]
            Length: 1 paragraph, 1000 characters
``` |
| ```
            Data:
             {'model id': 'customer churn prediction_v1',
             'model name': 'customer churn prediction',
             'model version': '1',
             'model owner': 'AIPM_Team',
             'model status': 'READY',
             'training date': '22 July 2022',
             'contact information': 'opsense@aipm.com'}
              System Information : {'python_version': '3.6.9.final.0 (64
            bit)',
             'cpuinfo_version': [8, 0, 0],
             'architecture': 'X86_64',
             'bits': 64,
             'brand_name': 'Intel(R) Xeon(R) CPU E5-2686 v4 @
            2.30GHz'}
             python modules used : opsense==2.4.2
                       matplotlib==3.3.4
                        sklearn==0.0
                       configparser==5.0.1
                       pandas== 1.1.5
``` |

In another embodiment, each prompt template is optimized using at least one of an iterative rephrasing technique and an iterative evaluation technique. This generates a plurality of prompt templates corresponding to the corresponding persona "data scientist". Then, each optimized prompt template along with the training data is stored in prompt templates datastore 210.

Referring to the steps of the method 300, at step 312 the one or more hardware processors generate by a commentary generator ML model one or more commentary data for each section associated with the prompt template corresponding to the persona.

In one embodiment, the commentary generator ML model (FIG.4) is trained to generate the one or more commentary data for each section associated with the prompt template. To train the commentary generator ML model, training dataset comprising commentary dataset are collected. The training dataset helps to learn the ML model to identify each section of the metadata corresponding to each persona on writing domain-aware content and use of language in commentary. The learned commentary generator ML model generates the one or more commentary data for each section corresponding to the persona.

FIG.5 depicts a flow diagram for persona-based specific model card document generation using the system of FIG. 1, in accordance with some embodiments of the present disclosure. For the above Example 1, the trained commentary generator ML model is used for inference (FIG.5). Here, the prompt templates are feeded as input to generate the one or more commentary data for each section of the prompt template.

**Table 8- Commentary data (Output of model card document)**

| |
|---|
| This is a customer churn prediction model, version 1, developed by AIPM_Team and is currently in the READY status. The model was trained on 22 July 2022 using Python 3.6.9.final.0 (64 bit) running on an Intel(R) Xeon(R)CPU E5-2686 v4 @ 2.30GHz with 8 cores and 64 bits. The Python modules used for training were opsense 2.4.2, matplotlib 3.3.4, sklearn 0.0, configparser 5.0.1, and pandas 1.1.5. For any inquiries regarding the model, please contact opsense@aipm.com. No citation and license details are available as of now |

The one or more commentary data corresponding to the "data scientist " persona are processed for domain-aware and friendly commentary and is evaluated for quality, for generating the persona specific ML model card for data scientist.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of generating commentary of machine learning model card document. The embodiment, thus provides method and system to generate persona-based commentary data for machine learning model card document. Moreover, the embodiments herein further provides an efficient method for model cards document generation with data analysis capability. Persona specific model card generation by data selection, prompt optimization, model training capability.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method to generate persona based commentary data, comprising:
receiving (302) via one or more hardware processor, a model card document comprising a plurality of sections corresponding to a persona, wherein the persona represents a type of person with role specific domain communication characteristics;
obtaining (304) for each section of the model card document via the one or more hardware processors, a metadata from a metadata store for the persona, wherein the metadata store comprises at least one of (i) a structured metadata and (ii) an unstructured metadata;
preprocessing (306) via the one or more hardware processors, the metadata to obtain relevant information for the plurality of sections of the model card document;
feeding (308) the preprocessed metadata into a data curator machine learning (ML) model via the one or more hardware processors, to obtain information associated with a plurality of sections corresponding to the persona;
generating (310) by the data curator ML model via the one or more hardware processors, a persona-based report trajectory for each section, based on the metadata of corresponding section and a plurality of schema rules, wherein a prompt template is generated for the persona-based report trajectory; and
generating (312) by a commentary generator machine learning (ML) model via the one or more hardware processors, one or more commentary data for each section associated with each prompt template corresponding to the persona.

2. The processor-implemented method of claim 1, wherein each prompt template is generated based on each persona-based report trajectory for the corresponding section of the metadata.

3. The processor-implemented method of claim 1, wherein the commentary generator machine learning model is trained to generate one or more commentary data for the report trajectory corresponding to the persona by performing the steps of:
providing a training dataset to identify each section of the metadata corresponding to each persona on writing domain-aware content and use of language in commentary; and
learning by the commentary generator machine learning model to generate the one or more commentary data for each section corresponding to the persona.

4. The processor-implemented method of claim 1, wherein the plurality of sections of the metadata comprises data required for each section of the model card document of the corresponding persona.

5. The processor-implemented method of claim 1, wherein the persona-based report trajectory comprises a plurality of trajectory parameters and its associated values.

6. The processor-implemented method of claim 1, wherein the plurality of schema rules comprises rules to generate the one or more commentary data, a language content, domain, and at least one language requirement of the persona for each section.

7. The processor-implemented method of claim 1, wherein each prompt template is optimized using at least one of an iterative rephrasing technique and an iterative evaluation technique.

8. The processor-implemented method of claim 1, wherein the plurality of schema rules relates to each rule comprising eligible personas, a list of data regular expressions, a readability level, and a list of domains.

9. A system (100), to generate persona based commentary data comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a model card document comprising a plurality of sections and the model card document corresponds to a persona, wherein the persona represents a type of person with role specific domain communication characteristics;
obtain for each section of the model card document, a metadata from a metadata store for the persona, wherein the metadata store comprises at least one of (i) a structured metadata and (ii) an unstructured metadata;
preprocess the metadata to obtain relevant information of the plurality of sections of the model card document;
feed the preprocessed metadata into a data curator machine learning (ML) model to obtain information associated with a plurality of sections corresponding to the persona;
generating by the data curator ML model a persona-based report trajectory for each section, based on the metadata of corresponding section and a plurality of schema rules, wherein a prompt template is generated for the persona-based report trajectory; and
generate by a commentary generator machine learning (ML) model one or more commentary data for each section associated with the prompt template corresponding to the persona.

10. The system of claim 9, wherein the prompt template is generated based on each persona-based report trajectory for the corresponding section of the metadata.

11. The system of claim 9, wherein the commentary generator machine learning model is trained to generate one or more commentary data for the report trajectory corresponding to the persona by performing the steps of:
providing a training commentary dataset to identify each section of the metadata corresponding to each persona on writing domain-aware content and use of language in commentary; and
learning by the commentary generator machine learning model to generate the one or more commentary data for each section corresponding to the persona.

12. The system of claim 9, wherein the plurality of sections of the metadata comprises data required for each section of the model card document of the corresponding persona, wherein the plurality of schema rules comprises rules to generate the one or more commentary data, a language content, domain, and at least one language requirement of the persona for each section.

13. The system of claim 9, wherein the persona-based report trajectory comprises a plurality of trajectory parameters and its associated values, wherein each prompt template is optimized using at least one of an iterative rephrasing technique and an iterative evaluation technique.

14. The system as claimed in claim 9, wherein the plurality of schema rules relates to each rule comprising eligible personas, a list of data regular expressions, a readability level, and a list of domains.

15. One or more non-transitory machine-readable information storage mediums comprising one or more instructions which when executed by one or more hardware processors cause:
receiving a model card document comprising a plurality of sections corresponding to a persona, wherein the persona represents a type of person with role specific domain communication characteristics;
obtaining for each section of the model card document a metadata from a metadata store for the persona, wherein the metadata store comprises at least one of (i) a structured metadata and (ii) an unstructured metadata;
preprocessing the metadata to obtain relevant information for the plurality of sections of the model card document;
feeding the preprocessed metadata into a data curator machine learning (ML) model to obtain information associated with a plurality of sections corresponding to the persona;
generating by the data curator ML model a persona-based report trajectory for each section, based on the metadata of corresponding section and a plurality of schema rules, wherein a prompt template is generated for the persona-based report trajectory; and
generating by a commentary generator machine learning (ML) model one or more commentary data for each section associated with each prompt template corresponding to the persona.
